(19) Europäisches Patentamt
European Patent Office
Office européen des brevets

(11) Veröffentlichungsnummer: **0 325 728 B1**

(12) # EUROPÄISCHE PATENTSCHRIFT

(45) Veröffentlichungstag der Patentschrift:
22.05.91 Patentblatt 91/21

(51) Int. Cl.⁵: **B23P 19/06,** B25B 21/00

(21) Anmeldenummer: **88119758.6**

(22) Anmeldetag: **26.11.88**

(54) Spannfutter für Gewindeschäfte.

(30) Priorität: **25.01.88 DE 3802003**

(43) Veröffentlichungstag der Anmeldung:
**02.08.89 Patentblatt 89/31**

(45) Bekanntmachung des Hinweises auf die
Patenterteilung:
**22.05.91 Patentblatt 91/21**

(84) Benannte Vertragsstaaten:
**AT BE CH ES FR GB IT LI NL SE**

(56) Entgegenhaltungen:
DE-A- 3 327 046
FR-A- 2 095 134
GB-A- 2 135 922
US-A- 2 251 491

(73) Patentinhaber: **EXPERT Maschinenbau GmbH**
**Seehofstrasse 56-58**
**W-6143 Lorsch (DE)**

(72) Erfinder: **Schmidt, Heinz**
**Fliederweg 4**
**W-6141 Einhausen (DE)**

(74) Vertreter: **Helber, Friedrich G., Dipl.-Ing. et al**
**Zenz, Helber, Hosbach Giesser Weg 47**
**W-6144 Zwingenberg (DE)**

EP 0 325 728 B1

## Beschreibung

Die Erfindung betrifft ein Spannfutter zum Einspannen der mit Außengewinde versehenen Enden von Gewindeschäften, wie Stiftschrauben, Gewindebolzen u.dgl. mit einem Spanneinsatz mit wenigstens zwei zwischen zwei Endstellungen verschwenkbaren und federnd in die auseinandergeschwenkte Endstellung vorgespannten Spannarmen, in deren von ihrer Schwenkachse abgewandten Stirnseite eine sich in der zusammengeschwenkten Stellung zu einer zum einzuspannenden Gewindeschaft-Ende komplementären Gewinde-Sackbohrung ergänzende Schaftaufnahme vorgesehen ist, wobei die Spannarme an ihrer Außenseite mit jeweils einer in bezug auf die Längsmittelachse der Schaftaufnahme schräg verlaufenden Keilfläche versehen sind, denen jeweils eine komplementäre Keilfläche in einem die Spannarme umgreifenden und relativ zu ihnen in Richtung der Längsmittelachse der Schaftaufnahme verstellbaren Spannelement zugeordnet sind, un wobei die Keilflächen so ausgerichtet sind, daß die Spannarme bei einer Verstellung des umgreifenden Spannelements im Sinne eines Aufeinanderschiebens der komplementären Keilflächen der Spannarme und des umgreifenden Spannelements entgegen der Vorspannung in die zusammengespannte Endstellung verschwenkt werden.

Es ist ein derartiges Spannfutter für von Hand geführte Bohrmaschinen oder Bohrhämmer bekannt (DE-C-33 27 046), bei welchen in einem vor einer Seite aus hohlgebohrten Spannelement durch Einarbeiten von Längsschlitzen drei federnde Spannarme gebildet sind, deren äußere Enden durch ein übergeschraubtes Spannelement in Form einer Spannhülse mit einer kegelstumpfförmigen inneren Spannfläche, welche mit sich insgesamt zu einer komplementären Kegelstumpffläche ergänzenden Teilflächen an den Spannarm-Enden zusammenwirkt, zusammenspannbar sind. Beim Andrehen der Spannhülse werden die freien Enden der Spannarme federnd radial nach innen verformt, so daß die Innenflächen der Spannarme am einzuspannenden Gewindeschaft angedrückt werden. Um eine Beschädigung des Gewindes im Einspannbereich zu vermeiden, sind die Innenflächen der Spannaufnahme mit einem komplementären Gegengewinde versehen. Beim Zurückschrauben der Spannhülse können die Enden der Spannarme radial so weit auffedern, daß sie einen zuvor eingespannten Gewindeschaft freigeben. Bei dem bekannten Spannfutter muß also sowohl zum Einspannen wie auch zum späteren wieder Freigeben der Gewindebolzen die Spannhülse von Hand gedreht werden. Das schließt die Verwendung an Einschraubautomaten für Gewindestifte in der Serienfertigung aus, selbst wenn es – was durchaus nicht ausgeschlossen erscheint – gelänge, eine automatische Zuführung für die Gewindestifte zu entwickeln, welche eine Beschickung des Spannfutters bei radial aufgeschwenkten Spannarmen von einem Gewindestiftvorrat aus ermöglicht. Das Auf- und Zuschrauben der Spannhülse von Hand würde zu einer unannehmbaren Verzögerung des Einspannvorgangs führen. Bei anderen, für die Serienfertigung angebotenen Einspannvorrichtungen für Gewindeschäfte muß der eigentliche Spannkopf nach dem Einschrauben eines Gewindeschafts in die vorgesehene Einschraubtiefe von diesem Gewindeschaft abgeschraubt werden. Das bedingt also, daß die den Einspannkopf haltende Arbeitsspindel der Antriebsmaschine nicht nur angehalten, sondern auch reversiert und so lange in entgegengesetzter Richtung angetrieben werden muß, bis sich die Einspannvorrichtung vom Gewindeschaft abgeschraubt hat. Es ist klar, daß auch solche Einspannvorrichtungen in der automatisierten Großserienfertigung zur Verlängerung der Montagezeiten führen.

Der Erfindung liegt demgegenüber die Aufgabe zugrunde, ein Spannfutter für Stiftschrauben oder andere mit Gewinde versehene schaft- oder bolzenförmige Werkstücke zu schaffen, welches die – vorzugsweise automatisch von einer Sortier- und Vereinzelungsvorrichtung zugeführten - Gewindebolzen nicht nur in der erforderlichen Weise ohne Beschädigung des Einspannbereichs fest ergreift, sondern nach dem Erreichen der vorgeschriebenen Einschraubtiefe bzw. eines vorgeschriebenen Einschraubmoments den Gewindeschaft freizugeben vermag, ohne daß hierzu der Drehantrieb für das Spannfutter reversiert oder ein spezielles Spannelement von Hand gedreht werden müßte.

Ausgehend von einem Spannfutter der eingangs erwähnten Art wird diese Aufgabe erfindungsgemäß dadurch gelöst, daß die Spannarme über ihre Schwenkachse hinaus jeweils zu einem zweiarmigen Hebel verlängert sind, die insgesamt den Spanneinsatz bilden, und im Bereich der der Spannaufnahme abgewandten Hebelarme ebenfalls jeweils eine zu den ersterwähnten Keilflächen gegensinnig geneigte Keilfläche aufweisen, denen ebenfalls jeweils eine komplementäre Keilfläche im umgreifenden Spannelement zugeordnet ist, daß die den Spanneinsatz bildenden zweiarmigen Hebel im umgreifenden Spannelement in Richtung der Längsmittelachse verschieblich, jedoch drehfest gehaltert sind, und daß der Abstand der an den gegenüberliegenden Hebelarmen der zweiarmigen Hebel vorgesehenen Keilflächen im Vergleich zum Abstand der im umgreifenden Spannelement vorgesehenen Keilflächen um soviel größer bemessen ist, daß bei einer Längsverschiebung des Spanneinsatzes in Anlage der an ihren spannarmabgewandten Hebelarmen vorgesehenen Keilflächen an den zugeordneten komplementären Keilflächen des Spannelements die Spannarme in ihre das Ende eines in die Schaftaufnahme eingesetzten Gewindeschafts freigebende Endstellung auseinandergeschwenkt sind. Bei Einschraubautomaten wird die Arbeitsspindel und somit das Spannfutter beim Einschraubvorgang in der Regel durch einen pneumatischen Zylinder in Einschraubrichtung vorgespannt, wodurch beim Ansetzen eines in die Schaftaufnahme eingeführten Gewindeschafts an einer Gewindebohrung in einem Werkstück die an sich durch die federnde Vorspannung aufgehaltene Spannarme zusammengeschwenkt und der Gewindeschaft somit fest eingespannt wird. Sobald dann die vorgeschriebene Einschraubtiefe bzw. ein vorgegebenes Einschraubmoment erreicht ist, muß lediglich die bis dahin zur Einwirkung gebrachte in Einschraubrichtung wirkende Vorschubkraft unterbrochen bzw. in ihrer Richtung umgekehrt werden. Infolge der zwischen dem Spannelement und dem Spanneinsatz wirkenden Vorspannung wird das Spannelement dann sogleich zurückgezogen und verschwenkt die Spannarme in die den Gewindeschaft freigebende auseinandergeschwenkte Stellung. Es ist ersichtlich, daß diese Funktion ohne Stillsetzen oder gar Reversieren der Arbeitsspindel der Antriebsmaschine eintritt. Die Umkehr der auf das Spannfutter wirkenden Vorschubkraft ist dagenen ohne Schwierigkeiten durch Umsteuern der Beaufschlagung des den Vorschubdruck ausübenden pneumatischen Zylinders möglich.

Das schaftabgewandte Ende des den Spanneinsatz längsverschieblich aufnehmenden Spannelements ist zweckmäßig in einer schaftaufnahmeseitig offen mündenden Aufnahme eines an der Arbeitsspindel einer Antriebsmaschine befestigbaren Gehäuses gehaltert.

Dabei ist die Ausgestaltung vorzugsweise so getroffen, daß in der den Spanneinsatz längsverschieblich aufnehmenden Durchgangsöffnung des Spannelements eine direkt oder indirekt auf den der Schaftaufnahme abgewandten Ende der Spannelement-Hebelarme einerseits und dem Boden der als Sackbohrung ausgebildeten Spannelementen-Aufnahme des Gehäuses andererseits abgestützte, in Längsrichtung unter Druckvorspannung stehende Feder angeordnet ist, welche die Hebelarme, d.h. den Spanneinsatz in die Gewindeschaft-Freigabestellung drängt.

Das Spannelement seinerseits ist zweckmäßig mit seinem im Gehäuse gehalterten Bereich mit einem Außengewinde versehen und in ein komplementäres Innengewinde in der Aufnahme des Gehäuses eingeschraubt, wobei der Steigungssinn der komplementären Gewinde des Spannelements und des Gehäuses dann so gewählt ist, daß sich das festgehaltene Spannelement bei einer Drehung des Gehäuses in Drehrichtung der Arbeitsspindel einer zugehörigen Arbeitsmaschine in das Gehäuse hineinschraubt. Dadurch wird sichergestellt, daß sich das Spannelement beim Arbeiten mit dem erfindungsgemäßen Spannfutter nicht aus dem zugehörigen Gehäuse selbst herausschrauben kann. Da eine Reversierung der Drehrichtung des Spannfutters auch beim Freigeben des zuvor eingeschraubten Gewindeschafts voraussetzungsgemäß nicht erforderlich ist, ist eine zusätzliche Sicherung des Gewindeeingriffs des Spannelements in die Gehäuse-Aufnahme nicht erforderlich.

Die Befestigung des Spannfutters an der Arbeitsspindel der Antriebsmaschine erfolgt vorzugsweise durch eine Ausgestaltung derart, daß in dem der Schaftaufnahme gegenüberliegenden Boden des Gehäuses eine Gewindebohrung zum Einschrauben eines komplementären Gegengewindes der Arbeitsspindel vorgesehen ist, wobei der Steigungssinn der komplementären Gewinde so gewählt ist, daß sich das Gewinde der in normaler Antriebs-Drehrichtung angetriebenen Arbeitsspindel in das Innengewinde des festgehaltenen Gehäuses hineinschraubt.

Im bodenseitigen Endbereich können dann zusätzlich wenigstens zwei parallele, radial gegenüberliegende ebene Flächen in die Außenseite des Gehäuses eingearbeitet sein, an welchen ein Maulschlüssel angesetzt werden kann, um das Gehäuse auf der Arbeitsspindel aufzuschrauben bzw. das Gehäuse beim Einschrauben des Gewindes der drehangetriebenen Arbeitsspindel gegenzuhalten.

Die Erfindung ist in der folgenden Beschreibung eines Ausführungsbeispiels in Verbindung mit der Zeichnung näher erläutert, und zwar zeigt :

Fig. 1 einen Längsmittelschnitt durch ein in der erfindungsgemäßen Weise ausgebildetes Spannfutter in der einen Gewindeschaft eingespannt haltenden Stellung ;

Fig. 2 eine Schnittansicht des Spannfutters, gesehen in Richtung der Pfeile 2-2 in Fig. 1 ; und

Fig. 3 eine der Schnittansicht gemäß Fig. 1 entsprechende Schnittansicht des Spannfutters in der Gewindeschaft-Freigabestellung.

Das in den Zeichnungsfiguren dargestellte, in seiner Gesamtheit mit 10 bezeichnete Spannfutter sei für die Montage, d.h. das schnelle Einschrauben von Stiftschrauben in Gewindebohrungen in Werkstücken bestimmt, die in schneller Folge taktweise auf einer Förderlinie in eine zu einem Einschraubautomat ausgerichtete Position geführt und dann, d.h. nach dem Einschrauben des Gewindestifts zur weiteren Bearbeitung oder Montage zu einer weiteren Arbeitsstation gefördert werden. Die einzuschraubenden Gewindestifte können dem Spannfutter 10 dabei von einer – an sich bekannten – Vereinzelungsvorrichtung automatisch und lagerichtig zugeführt werden.

Das Spannfutter 10 weist ein äußeres Gehäuse 12 in Form einer mit einem Innengewinde 14 versehenen, an einer Stirnseite offenen und der anderen Stirnseite durch einen massiven Boden 16 geschlossenen Hülse auf. Im Boden 16 ist mittig eine durchgehende Gewindebohrung 18 mit dem Vergleich zum Innengewinde 14 deutlich verringertem Durchmesser vorgesehen, welche auf einen (nicht gezeigten) mit Außengewinde versehenen Anschlußkopf der Arbeitsspindel des Einschraubautomaten aufschraubbar ist. Um das Gehäuse beim Aufschrauben auf die Arbeitsspindel drehen zu können, oder – wenn das Aufschrauben durch den Drehantrieb der Arbeitsspindel bei festgehaltenem Gehäuse erfolgt – das Gehäuse gegen Mitdrehen halten zu können, sind im Bereich des Bodens 16 zwei parallele, radial gegenüberliegende ebene Flächen 20 in die Außenseite des Gehäuses eingearbeitet, über welche ein Schraubenschlüssel – beispielsweise ein Maulschlüssel mit dem Abstand der ebenen Flächen voneinander entsprechender Maulöffnung – geschoben werden kann.

In das Innengewinde 14 ist ein langgestrecktes mit Außengewinde 22 versehenes Spannelement 24 eingeschraubt, dessen Länge so bemessen ist, daß es noch aus der offenen bodenabgewandten Seite des Gehäuses 12 vortritt, wobei am vortretenden freien Ende des Spannelements ebenfalls wieder das Ansetzen eines Schraubschlüssels erleichternde Mittel, beispielsweise in Form eines Sechskantkopfes 26 oder eines an seinem Umfang aufgerauhten im Durchmesser vergrößerten Kopfs, vorgesehen sind.

Das Spannelement 24 weist eine in der aus dem Gehäuse 12 vortretenden Ende vorgesehenen Stirnfläche einerseits und der an die Innenfläche des Gehäuse-Bodens 16 in Anlage geschraubten gegenüberliegenden Stirnfläche andererseits offen mündende und sich in ihrem Querschnitt innerhalb des Spannelements 24 in der im folgenden noch näher erläuterten Weise ändernde Durchgangsöffnung 28 auf. In diese Durchgangsöffnung 28 ist ein Spanneinsatz 30 über einen vorgegebenen Verschiebungsweg längsverschieblich eingesetzt, der sich aus zwei langgestreckten längsgeteilten Spanneinsatzhälften 30a, 30b zusammensetzt, die ihrerseits etwa im mittleren Bereich des Spanneinsatzes um eine von der Mittelachse eines Querstifts 32 gebildete Achse verschwenkbar sind. Der Querstift ist in einer jeweils halbzylindrischen, querverlaufenden Vertiefung 34 in der zugewandten Seite jeder Spanneinsatzhälfte eingelegt, d.h. die beiden Spanneinsatzhälften 30a, 30b stellen funktionell jeweils einen Doppelhebel dar. Wenn die spannelementinneren Enden dieser Doppelhebel in Richtung aufeinanderzu verschwenkt werden, entfernen sich demzufolge die gegenüberliegenden Enden und umgekehrt. In einem mittleren Bereich 36 weist die Durchgangsöffnung 28 einen im Querschnitt verringerten Abschnitt auf, der an beiden Enden in schräg zur Längsmittelachse geneigte gegenüberliegende Keilflächen 38 und 40 in jeder Spanneinsatzhälfte 30a, 30b übergeht. In der zugewandten Außenseite weist jede Spanneinsatzhälfte 30a, 30b jeweils eine komplementär geneigte Keilfläche 42 bzw. 44 auf, wobei der in Längsrichtung gemessene Abstand der letzterwähnten Keilflächen 42, 44 voneinander größer als der entsprechende Abstand der Keilflächen 38, 40 voneinander ist. Der Spanneinsatz 30 ist also um das Unterschiedsmaß der Abstände der Keilflächen des Spannelements bzw. des Spanneinsatzes in Längsrichtung verschieblich im Spannelement 24 gehalten. Durch entsprechend komplementäre Querschnittsform der verengten Mittelbereiche des Spannelements 24 und des Spanneinsatzes 30 ist der Spanneinsatz andererseits aber drehfest im Spannelement gehalten.

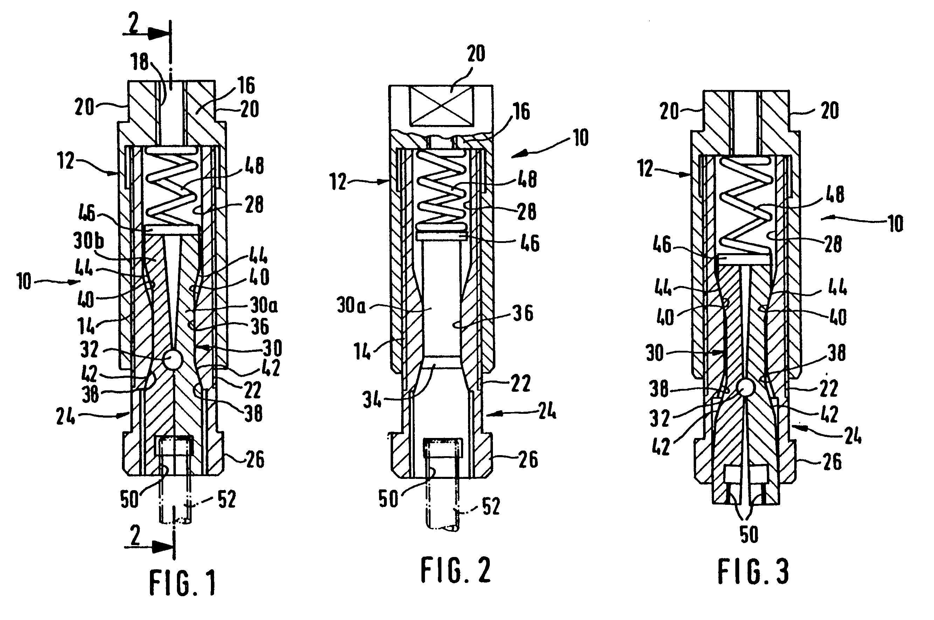

Eine an der Innenfläche des Bodens 16 einerseits und über eine Zwischenscheibe 46 am Spanneinsatz 30 andererseits abgestützte, unter Druckvorspannung stehende Schraubenfeder 48 drängt den Spanneinsatz 30 normalerweise in die in Figur 3 gezeigt Stellung, in welcher die komplementären Keilflächen 40, 44 des Spannelements bzw. des Spanneinsatzes in Anlage aneinandergedrängt und die zum Boden 16 weisenden Hebelarme der Spanneinsatzhälften 30a, 30b zusammengeschwenkt sind. Dementsprechend sind dann die gegenüberliegenden, aus dem Spannelement vortretenden Enden der Spanneinsatzhälften auseinandergeschwenkt. Wenn andererseits der Spanneinsatz entgegen der auf ihn wirkenden Federvorspannung in Richtung zum Boden 16 des Gehäuses ins Spannelement zurückgedrängt wird, kommen die komplementären Keilflächen 38, 42 des Spannelements bzw. des Spanneinsatzes aneinander zur Anlage und die Spanneinsatzhälften 30a, 30b werden in entgegengesetztem Sinne verschwenkt, d.h. die dann etwa bündig mit der freien Stirnfläche des Spannelements 24 abschließenden Enden der Spanneinsatzhälften sind in Anlage aneinander zusammengeschwenkt, während die zum Boden 16 weisenden Enden der ins Gehäuseinnere weisenden Hebelarme der Spanneinsatzhälften auseinandergeschwenkt sind. In den Figuren 1 und 2 ist die zuletzt beschriebene Lage des Spanneinsatzes 30 im Spannelement 24 dargestellt. In die freie Stirnfläche des Spanneinsatzes 30 ist eine jeweils hälftig in jeder Spanneinsatzhälfte ausgebildete, mit Gewinde versehene Sackbohrung 50 vorgesehen, deren Durchmesser und Gewindesteigung dem Durchmesser und der Gewindesteigung des Außengewindes eines im Spannfutter einzuspannenden Gewindestifts 52 entspricht. In den Figuren 1 und 2 ist die Lage eines in der Gewindebohrung 50 aufgenommenen und gehaltenen Gewindestifts 52 strichpunktiert angedeutet.

Es ist nun ersichtlich, daß in der nicht mit einem Gewindestift beschickten Ausgangsstellung (Fig. 3) die auch als "Spannarme" bezeichneten äußeren Hebelarme der Spanneinsatzhälften 30a, 30b so weit aufgeschwenkt sind, daß ein Gewindestift ohne Schwierigkeiten senkrecht bis zur Anlage seiner freien Stirnfläche am Boden der Gewindebohrung 50 einsetzbar ist. Bei leichtem Druck auf den Gewindestift schiebt sich der Spanneinsatz 30 dann entgegen der Spannung der Feder 48 in Längsrichtung ins Innere des Spannelements 24 hinein, wobei die Keilflächen 42 an den Keilflächen 38 zur Anlage kommen. Spannarme werden dann infolge der Keilwirkung zusammengeschwenkt und der Gewindestift 52 in der dann komplementär geschlossenen Gewindebohrung 50 eingespannt gehalten. Der Gewindestift 52 kann dann in eine zugeordnete Gewindebohrung in einem Werkstück eingeschraubt werden. Sobald die korrekte Einschraubtiefe bzw. ein vorgegebenes Einschraubmoment erreicht ist, wird das Gehäuse 12 und somit das Spannelement 24 entgegen der Einschraubrichtung zurückgezogen, was bei Einschraubautomaten mit einer durch einen Pneumatikzylinder in Vorschubrichtung beaufschlagten Arbeitsspindel einfach dadurch möglich ist, daß die Beaufschlagung des Pneumatikzylinders umgekehrt wird. Da hierbei der Spanneinsatz zunächst noch durch den Gewindeeingriff mit dem Gewindestift gegen Zurückziehen gehalten wird, verschiebt sich der Spanneinsatz 30 relativ zum Spannelement 24 bis die komplementären Keilflächen 40, 44 aneinander zur Anlage kommen, wodurch die zum Boden 16 weisenden Hebelarme der Spanneinsatzhälften 30a, 30b aufeinanderzu verschwenkt und dementsprechend die äußeren, die Spannarme bildenden Hebelarme auseinandergeschwenkt werden. Dann gibt die jeweils zur Hälfte in den Spannarmen gebildete Gewindebohrung 50 den Gewindestift frei und das Spannfutter kann insgesamt vom Gewindestift zurückgezogen werden, ohne daß hierfür eine Reversierung der Drehrichtung der Arbeitsspindel des Einschraubautomaten erforderlich ist.

Es ist ersichtlich, daß im Rahmen des Erfindungsgedankens Abwandlungen und Weiterbildungen des vorstehend als Ausführungsbeispiel beschriebenen Spannfutters 10 verwirklichbar sind. So kann der als aus zwei Spanneinsatzhälften 30a, 30b beschriebene Spanneinsatz 30 auch aus drei jeweils um 120° zueinander versetzt angeordneten doppelarmigen Spanneinsatzteilen zusammengesetzt sein, für deren Schwenklagerung dann anstelle der Rolle 32 eine in entsprechend kugel- abschnittsförmigen Vertiefungen in den Spanneinsatzteilen gehaltene Kugel dient. An die Stelle der Schraubenfeder 48 können auch andere geeignete Federtypen, z.B. geschichtete Tellerfedern, treten.

## Ansprüche

1. Spannfutter (10) zum Einspannen der mit Außengewinde versehenen Enden von Gewindeschäften (52), wie Stiftschrauben, Gewindebolzen u.dgl. mit einem Spanneinsatz (30) mit wenigstens zwei zwischen zwei Endstellungen verschwenkbaren und federnd in die auseinandergeschwenkte Endstellung vorgespannten Spannarmen, in deren von ihrer Schwenkachse abgewandten Stirnseite eine sich in der zusammengeschwenkten Stellung zu einer zum einzuspannenden Gewindeschaft-Ende komplementären Gewinde-Sackbohrung (50) ergänzende Schaftaufnahme vorgesehen ist, wobei die Spannarme an ihrer Außenseite mit jeweils einer in bezug auf die Längsmittelachse der Schaftaufnahme schräg verlaufenden Keilfläche (42) versehen sind, denen jeweils eine komplementäre Keilfläche (38) in einem die Spannarme umgreifenden und relativ zu ihnen in Richtung der Längsmittelachse der Schaftaufnahme verstellbaren Spannelement (24) zugeordnet sind, und wobei die Keilflächen so ausgerichtet sind, daß die Spannarme bei einer Verstellung des umgreifenden Spannelements (24) im Sinne eines Aufeinanderschiebens der komplementären Keilflächen der Spannarme und des umgreifenden Spannelements entgegen der Vorspannung in die zusammengespannte Endstellung verschwenkt sind, **dadurch gekennzeichnet**, daß die Spannarme über ihre Schwenkachse hinaus jeweils zu einem zweiarmigen Hebel (30a ; 30b) verlängert sind, die insgesamt den Spanneinsatz (30) bilden, und im Bereich der der Spannaufnahme (50) abgewandten Hebelarme ebenfalls jeweils eine zu den ersterwähnten Keilflächen (38 ; 42) gegensinnig geneigte Keilfläche (44) aufweisen, denen ebenfalls jeweils eine komplementäre Keilfläche (40) im umgreifenden Spannelement (24) zugeordnet ist, daß die den Spanneinsatz (30) bildenden zweiarmigen Hebel (30a ; 30b) im umgreifenden Spannelement (24) in Richtung der Längsmittelachse verschieblich, jedoch drehfest gehaltert sind, und daß der Abstand der an den gegenüberliegenden Hebelarmen der zweiarmigen Hebel (30a ; 30b) vorgesehenen Keilflächen (42 : 44) im Vergleich zum Abstand der im umgreifenden Spannelement (24) vorgesehenen Keilflächen (38 ; 40) um soviel größer bemessen ist, daß bei einer Längsverschiebung des Spanneinsatzes (30) in Anlage der an ihren spannarmabgewandten Hebelarmen vorgesehenen Keilflächen (44) an den zugeordneten komplementären Keilflächen (40) des Spannelements (24) die Spannarme in ihre das Ende eines in die Schaftaufnahme (50) eingesetzten Gewindeschafts (52) freigebende Endstellung auseinandergeschwenkt sind.

2. Spannfutter nach Anspruch 1, dadurch gekennzeichnet, daß das schaftaufnahmeabgewandte Ende des den Spanneinsatz (30) längsverschieblich aufnehmenden Spannelements (24) in einer schaftaufnahmeseitig offen mündenden Aufnahme (Gewindebohrung 14) eines an der Arbeitsspindel einer Antriebsmaschine befestigbaren Gehäuses (12) gehaltert ist.

3. Spannfutter nach Anspruch 2, dadurch gekennzeichnet, daß in der den Spanneinsatz (30) längsveschieblich aufnehmenden Durchgangsöffnung (28) des Spannelements (24) eine direkt oder indirekt auf den der Schaftaufnahme (50) abgewandten Enden der Spannelement-Hebelarme einerseits und dem Boden (16) der als Sackbohrung ausgebildeten Spannelementen-Aufnahme des Gehäuses (12) andererseits abgestützte, in Längsrichtung unter Druckvorspannung stehende Feder (48) angeordnet ist.

4. Spannfutter nach Anspruch 2 oder 3, dadurch gekennzeichnet, daß das Spannelement (24) in seinem im Gehäuse (12) gehalterten Bereich mit einem Außengewinde (22) versehen und in ein komplementäres Innengewinde in der Aufnahme (14) des Gehäuses (12) eingeschraubt ist, und daß der Steigungssinn der komplementären Gewinde des Spannelements (24) und des Gehäuses (12) so gewählt ist, daß sich das festgehaltene Spannelement (24) bei einer Drehung des Gehäuses (12) in Drehrichtung der Arbeitsspindel einer zugehörigen Antriebsmaschine in das Gehäuse (12) hineinschraubt.

5. Spannfutter nach Anspruch 3 oder 4, dadurch gekennzeichnet, daß in dem der Schaftaufnahme (50) gegenüberliegenden Boden (16) des Gehäuses (12) eine Gewindebohrung (18) zum Einschrauben eines komplementären Gegengewindes der Arbeitsspindel einer zugehörigen Antriebsmaschine vorgesehen ist, wobei der Steigungssinn der komplementären Gewinde so gewählt ist, daß sich das Gewinde der in normaler Antriebs-Drehrichtung angetriebenen Arbeitsspindel in das Innengewinde des festgehaltenen Gehäuses (12) hineinschraubt.

6. Spannfutter nach Anspruch 5, dadurch gekennzeichnet, daß im bodenseitigen Endbereich wenigstens zwei parallele, radial gegenüberliegende ebene Flächen (20) in die Außenseite des Gehäuses (12) eingearbeitet sind.

## Claims

1. Stud chuck (10) for clamping the externally threaded ends of threaded shafts (52), such as stud bolts, plug bolts and the like, including a clamping insert (30) with at least two clamping arms which are pivotable between two end positions and are resiliently biased into the pivoted-apart end position and in whose end face remote from their pivotal axis there is provided a shaft holding fixture which in the pivoted-together position constitutes a blind threaded bore (50) complementary to the shaft end which is to be clamped, whereby the clamping arms are provided on their outer surface with a respective wedge surface (42) extending obliquely with respect to the longitudinal central axis of the shaft holding fixture, associated with each of which is a complementary wedging surface (38) in a clamping element (24) which surrounds the clamping arms and is movable relative to them in the direction of the longitudinal central axis of the shaft holding fixture, and whereby the wedging surfaces are so aligned that the clamping arms are pivoted into the pivoted-together end position when the surrounding clamping element (24) is moved in the sense of a sliding over one another of the complementary wedging surfaces on the clamping arms and the surrounding clamping element against the biasing force, characterised in that the clamping arms are each extended beyond their pivotal axis in the form of a two-armed lever (30a ; 30b) which together form the clamping insert (30) and in the region of the lever arms remote from the clamping fixture (30) also each have a wedging surface (44) oppositely inclined to the first-mentioned wedging surfaces (38 ; 42), associated with which there is also a respective complementary wedging surface (40) in the surrounding clamping element (24), that the two-armed levers (30a ; 30b) constituting the clamping insert (30) are mounted in the surrounding clamping element (24) so as to be movable in the direction of the longitudinal central axis but fixed against rotation and that the spacing of the wedging surfaces (42 : 44) provided on the opposing lever arms of the two-armed levers (30a; 30b) is dimensioned so much larger by comparison to the spacing of the wedging surfaces (38 ; 40) provided in the surrounding clamping element (24) that on longitudinal movement of the clamping insert (30) into engagement of the wedging surfaces (44) provided on their lever arms remote from their clamping arms with the associated complementary wedging surfaces (40) on the clamping element (24) the clamping arms are pivoted apart into their end position which releases the end of a threaded shaft (52) inserted into the shaft holding fixture (50).

2. Stud chuck as claimed in claim 1, characterised in that the end remote from the shaft holding fixture of the clamping element (24) which longitudinally movably receives the clamping insert (30) is mounted in a fixture (threaded bore 14), which is open at the shaft holding fixture end, in a housing (12) which may be secured to the working spindle of a drive machine.

3. Stud chuck as claimed in claim 2, characterised in that arranged in the through hole (28), which longitudinally movably receives the clamping insert (30), in the clamping element (24) a spring (48) is arranged which is under a compressional biasing force in the longitudinal direction and bears on the one hand directly or indirectly on the ends remote from the shaft fixture (50) of the clamping element lever arms and on the other hand on the base (16) of the clamping element fixture in the housing (12) constructed as a blind bore.

4. Stud chuck as claimed in claim 2 or 3, characterised in that the clamping element (24) is provided with an external thread in its region mounted in the housing (12) and is screwed into a complementary internal thread in the fixture (14) in the housing (12) and that the direction of the pitch of the complementary thread on the clamping element (24) and on the housing (12) is so selected that the fixed clamping element (24) screws into the housing (12) on rotation of the housing (12) in the direction of rotation of the working spindle of an associated drive machine.

5. Stud chuck as claimed in claim 3 or 4, characterised in that provided in the base (16), opposite to the shaft fixture (50), of the housing (12) there is a threaded bore (18) for screwing in a complementary opposing thread of the working spindle of an associated drive machine, whereby the direction of the pitch of the complementary thread is so selected that the thread of the working spindle, when driven in the normal drive direction, screws into the internal thread in the fixed housing (12).

6. Stud chuck as claimed in claim 5, characterised in that at least two parallel radially opposing flat surfaces (20) are worked into the external surface of the housing (12) in the end region closest to the base.

## Revendications

1. Mandrin (10) pour le serrage des extrémités, pourvues de filetage extérieur, de tiges filetées (52), telles que des goujons filetés, des boulons filetés, et analogues, avec une garniture de serrage (30) comportant au moins deux bras de serrage pivotant entre deux positions d'extrémité et précontraints élastiquement dans la position finale d'écartement après pivotement, bras de serrage dans la face frontale opposée à son axe de pivotement desquels est prévu un logement de tige qui, en position de rapprochement après pivotement, complète par un trou borgne taraudé (50), complémentaire de l'extrémité de tige filetée à serrer, les bras de serrage étant chacun pourvus sur leur face extérieure d'une surface de coin (42) s'étendant en biais par rapport à l'axe longitudinal du logement de tige, à chacune desquelles est associée une surface de coin (38) complémentaire, située dans un organe de serrage (24) entourant les bras de serrage et réglable par rapport à ceux-ci, en direction de l'axe longitudinal du logement de tige, les surfaces de coin étant orientées de façon que, lors d'un déplacement de réglage de l'élément de serrage (24) qui les entoure dans le sens d'un écartement des surfaces de coin complémentaires des bras de serrage et de l'élément de serrage qui les entoure, les bras de serrage pivotent en position d'extrémité contrainte et rapprochée, en s'opposant à la précontrainte, caractérisé en ce que les bras de serrage sont chacun prolongés au-delà de leur axe de pivotement pour former un levier à deux bras (30a ; 30b), qui forment conjointement la garniture de serrage (30) et, dans la zone des bras de levier opposés écartée du logement de serrage (50) présentent également chacune une surface de coin (44), inclinée en sens inverse par rapport aux surfaces de coin (38 ; 42) mentionnées en premier, à laquelle est également associée une surface de coin (40) complémentaire dans l'élément de serrage (24) qui l'entoure, que les leviers à deux bras (30a ; 30b) formant la garniture de serrage (30) est mobile en direction de l'axe longitudinal dans l'élément de serrage (24) qui l'entoure, tout en étant fixé en rotation, et qu'en comparaison de la distance entre les surfaces de coin (38 ; 40) prévues dans l'élément de serrage (24) qui l'entoure, la distance entre les surfaces de coin (42 ; 44) prévues sur les bras de levier opposés du levier à deux bras (30a ; 30b) est choisie d'autant plus grande que lors d'un déplacement longitudinal de la garniture de serrage (30), les surfaces de coin (44) prévues sur les bras de levier opposés au bras de serrage étant en appui sur les surfaces de coin (40) complémentaires associées de l'élément de serrage (24), les bras de serrage sont amenés écartés par pivotement dans leur position d'extrémité en libérant l'extrémité d'une tige filetée (52) insérée dans le logement de tige (50).

2. Mandrin de serrage selon la revendication 1, caractérisé en ce que l'extrémité, opposée au logement de tige, de l'élément de serrage (24) qui reçoit la garniture de serrage (30) mobile longitudinalement, est maintenue dans un logement (taraudage 14), ouvert qui débouche du côté du logement de tige, d'un carter (12) susceptible d'être fixé sur la broche de travail d'une machine d'entraînement.

3. Mandrin de serrage selon la revendication 2, caractérisé en ce qu'est disposé, dans l'orifice traversant (28), de l'élément de serrage (24) logeant mobile longitudinalement la garniture de serrage (30), un ressort (48) placé sous une précontrainte de compression en direction longitudinale, qui est, d'une part, appuyé directement ou indirectement sur les extrémités, opposées au logement de tige (50), des bras de levier de l'élément de serrage, et, d'autre part, appuyé sur le fond (16) du logement des éléments de serrage, réalisé sous forme de trou borgne, du carter (12).

4. Mandrin de serrage selon la revendication 2 ou 3, caractérisé en ce que, dans sa zone maintenue dans le carter (12), l'élément de serrage (24) est pourvu d'un filetage extérieur (22) et est vissé dans un taraudage complémentaire situé dans le logement (14) du carter (12), et que le sens du pas du filetage complémentaire de l'élément de serrage (24) et du carter (12) est choisi tel que, lors d'une rotation du carter (12) dans le sens de rotation de la broche de travail d'une machine d'entrainement associée, l'élément de serrage maintenu fixé (24) pénètre par vissage dans le carter (12).

5. Mandrin de serrage selon la revendication 3 ou 4, caractérisé en ce que, dans le fond (16), opposé au logement de tige (50), du carter (12), est prévu un taraudage (18) pour visser une contre-filetage complémentaire de la broche de travail d'une machine d'entraînement associée, le sens du pas du filetage complémentaire étant choisi tel que le filetage de la broche de travail qui est entraînée dans le sens de rotation normale de l'entraînement pénètre par vissage dans le taraudage du carter fixé (12).

6. Mandrin de serrage selon la revendication 5, caractérisé en ce qu'au moins deux surfaces planes (20) parallèles et opposées radialement sont usinées sur la face extérieure du carter (12) dans la zone d'extrémité située du côté du fond.

FIG. 1

FIG. 2

FIG. 3

EP 0 325 728 B1